# EUROPEAN PATENT APPLICATION

(11) **EP 4 797 710 A1**
(43) Date of publication of application: **26.08.2026**
(21) Application number: 24879022.2
(22) Date of filing: 16.10.2024
(51) Int. Cl.: H04N 21/81

(54) **VIDEO GENERATION**

(30) Priority: 16.10.2023 CN 202311338422
(71) Applicant: Alipay (Hangzhou) Digital Service Technology Co., Ltd., Hangzhou, Zhejiang 310000 (CN)
(72) Inventor: TENG, Jiajie, Hangzhou, Zhejiang 310000 (CN); HU, Yongheng, Hangzhou, Zhejiang 310000 (CN)
(74) Representative: Winter, Brandl - Partnerschaft mbB
(86) International application number: PCT/CN2024/125198
(87) International publication number: WO 2025/082380

(57) **Abstract**

Embodiments of this specification disclose a video generation method and apparatus. According to the video generation method, incremental learning training is performed on a neural radiance field model of a target scene by collecting a supplementary sample image, and visual angle information is continuously supplemented to learn and optimize a capability of representing the target scene.

## Description

### TECHNICAL FIELD

Embodiments of this specification relate to the field of computer technologies, and in particular, to a video generation method and apparatus.

### BACKGROUND

A virtual reality (VR) panoramic immersive display solution uses an advanced VR technology, so that a user may feel a virtual scene in an immersive manner. Whether visiting historical sites, exploring natural scenery, participating in conference activities, or experiencing products, the user may obtain a realistic experience in the virtual world as if the user were close to the scene. This immersive experience adds more fun and attractiveness to a display activity.

A panoramic video of the VR panoramic immersive display solution usually needs to be photographed by a professional photographing team, and high-quality scene image data is collected at one time, resulting in a complex collection process. In addition, training optimization and rendering track selection need to be additionally performed. A large AI painting tool can generate a plurality of frames of panoramic videos of varying visual angles based on a single image and descriptions in this specification. Because training data does not include image information of a plurality of visual angles and corresponding semantic annotations, visual angle information included in the generated panoramic video is not sufficiently abundant, and a plurality of visual angles are consistent.

### SUMMARY

Embodiments of this specification provide a video generation method and apparatus, a storage medium, and an electronic device, and technical solutions thereof are as follows.

According to a first aspect, an embodiment of this specification provides a video generation method, including:
obtaining a sample image set of a target scene, the sample image set including a plurality of original sample images related to the target scene;
generating a browsing track of the target scene and a neural radiance field model of the target scene based on the sample image set;
generating, based on the browsing track and the neural radiance field model, a rendered image of the target scene corresponding to the browsing track;
performing quality evaluation on the rendered image, to obtain a quality evaluation result of each rendered image; obtaining a supplementary sample image corresponding to the rendered image if the quality evaluation result of the rendered image is lower than expectation; adding the supplementary sample image to the sample image set, to obtain an updated sample image set; regenerating the neural radiance field model of the target scene based on the updated sample image set, to obtain an updated neural radiance field model; regenerating, based on the browsing track and the updated neural radiance field model, the rendered image of the target scene corresponding to the browsing track; and repeating this step, until the quality evaluation result of the rendered image of the target scene corresponding to the browsing track is not lower than expectation; and
generating a panoramic video of the target scene based on the rendered image of the target scene corresponding to the browsing track.

According to a second aspect, an embodiment of this specification provides a video generation apparatus, including:
an image obtaining module, configured to obtain a sample image set of a target scene, the sample image set including a plurality of original sample images related to the target scene;
an image processing module, configured to generate a browsing track of the target scene and a neural radiance field model of the target scene based on the sample image set;
a rendering module, configured to generate, based on the browsing track and the neural radiance field model, a rendered image of the target scene corresponding to the browsing track;
a quality evaluation and supplementary collection module, configured to: perform quality evaluation on the rendered image, to obtain a quality evaluation result of each rendered image; obtain a supplementary sample image corresponding to the rendered image if the quality evaluation result of the rendered image is lower than expectation; add the supplementary sample image to the sample image set, to obtain an updated sample image set; regenerate the neural radiance field model of the target scene based on the updated sample image set, to obtain an updated neural radiance field model; regenerate, based on the browsing track and the updated neural radiance field model, the rendered image of the target scene corresponding to the browsing track; and repeat this step, until the quality evaluation result of the rendered image of the target scene corresponding to the browsing track is not lower than expectation; and
a video generation module, configured to generate a panoramic video of the target scene based on the rendered image of the target scene corresponding to the browsing track.

According to a third aspect, an embodiment of this specification provides a computer-readable storage medium, storing a computer program, and the computer program, when executed by a processor, implementing the steps of the method according to the first aspect.

According to a fourth aspect, an embodiment of this specification provides an electronic device, including:
one or more processors; and
a memory associated with the one or more processors, the memory being configured to store program instructions, and the program instructions, when being read and executed by the one or more processors, implementing the steps of the method according to the first aspect.

Beneficial effects brought by the technical solutions provided by one or more embodiments of this specification are as follows.

Incremental learning training is performed on the neural radiance field model of the target scene by collecting the supplementary sample image, visual angle information is continuously supplemented to learn and optimize a capability of representing the target scene, and the panoramic video of high quality is generated based on low image data collection and training costs.

### BRIEF DESCRIPTION OF THE DRAWINGS

To describe the technical solutions in embodiments of this specification more clearly, the following briefly introduces the accompanying drawings required for the embodiments. Apparently, the accompanying drawings in the following descriptions merely show some embodiments of this specification, and a person of ordinary skill in the art may still derive other drawings based on these accompanying drawings without creative efforts.
FIG. 1 is a schematic flowchart of a video generation method according to an embodiment of this specification;
FIG. 2 is a schematic flowchart of step 102 in FIG. 1;
FIG. 3 is a schematic diagram of an exemplary application scene of a video generation method according to an embodiment of this specification;
FIG. 4 is a schematic structural diagram of a video generation apparatus according to an embodiment of this specification; and
FIG. 5 is a schematic architectural diagram of an exemplary electronic device.

### DETAILED DESCRIPTION

To make the objectives, technical solutions, and advantages of this application clearer, the following clearly and completely describes the technical solutions in embodiments of this specification with reference to the embodiments of this specification and the corresponding accompanying drawings. Apparently, the described embodiments are some embodiments rather than all the embodiments of this application. All other embodiments obtained by a person skilled in the art based on embodiments of this application without creative efforts shall fall within the protection scope of this application.

In the specification, claims, and accompanying drawings, the terms "include", "have", and any variants thereof are intended to cover a non-exclusive inclusion. For example, processes, methods, systems, products, or devices including a series of steps or units is not limited to the listed steps or units, but instead, optionally include other steps or units not listed, or optionally include other steps or units inherent to the processes, methods, products, or devices. Depending on a context, the term "if" as suitable herein may be interpreted as "when..." or "upon..." or "in response to determining or "in response to detecting".

For synthesis of a conventional panoramic video, one-time high-quality scene image collection, additional training optimization, and rendering track selection are usually needed, and there are technical problems such as insufficient visual angle information and insufficient consistency between a plurality of visual angles included in the panoramic video generated by a large AI painting tool based on a single image and descriptions in this specification. An embodiment of this specification provides a video generation method for collecting a supplementary sample image to perform incremental learning training on a neural radiance field model of a target scene. A capability of representing the target scene is learned and optimized by collecting supplementary visual angle information of the supplementary sample image, thereby generating a panoramic video of high quality based on low image data collection and training costs.

The following describes the technical solutions provided in the embodiments of this specification in detail with reference to the accompanying drawings.

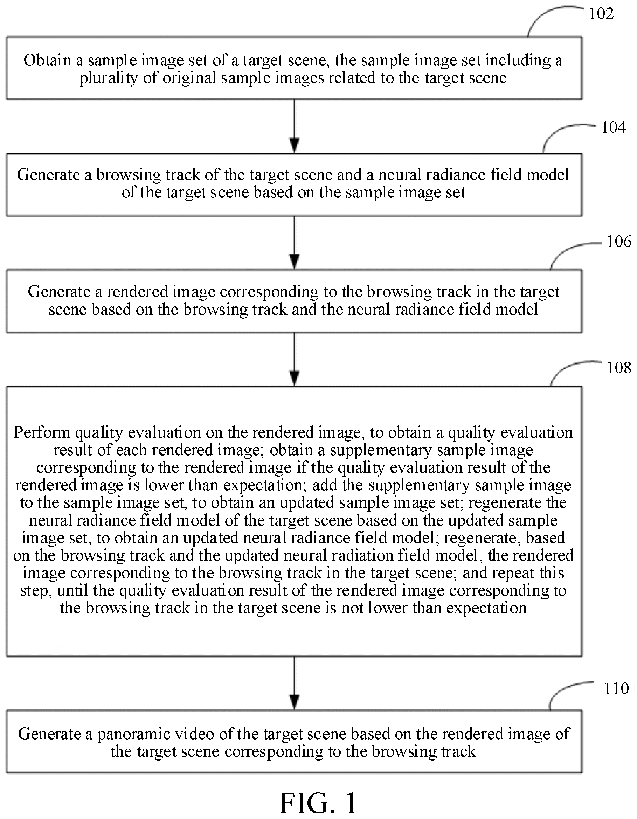

FIG. 1 is a schematic flowchart of a video generation method according to an embodiment of this specification. Referring to FIG. 1, the method may include the following steps 102 to 110.

102: Obtain a sample image set of a target scene, the sample image set including a plurality of original sample images related to the target scene.

The target scene may be any object that needs to be displayed, for example, a scene such as a street, a shopping mall, a road, a shop, or a square, or may be an object such as shoes, a desk, or a car. In an immersive panoramic display application scene, a three-dimensional model of the target scene is needed. Model content seen under different visual angles may be determined based on the three-dimensional model of the target scene, and then images under different visual angles are rendered based on the model content, to generate a panoramic video of the target scene. Before three-dimensional reconstruction is performed on the target scene, the sample image set of the target scene is obtained, and the sample image set includes the plurality of original sample images related to the target scene, to facilitate performing three-dimensional reconstruction of the target scene based on the original sample images. In some embodiments, the target scene in the real world may be photographed from different photographing angles, to obtain the plurality of original sample images related to the target scene or obtain a video of the target scene, and the plurality of original sample images related to the target scene are extracted from the video. In some other embodiments, photographing may be performed in a manner of surrounding inside or outside the target scene, to improve accuracy of reconstructing the three-dimensional model of the target scene, thereby improving image rendering quality based on the three-dimensional model. Different original sample images may correspond to different camera poses, and the camera poses include a position and a pose of a photographing device when the photographing device photographs an image. The photographing device may be any device that can obtain image data of the target scene, for example, may be, but is not limited to, a camera, a mobile phone having a photographing function, a tablet computer, or a wearable device. For example, a mobile phone device having a high popularity and having a photographing function may be used, to photograph the video of the target scene within one to two minutes, and extract the plurality of original sample images related to the target scene from the video, where the original sample images may be image data in an RGB format.

104: Generate a browsing track of the target scene and a neural radiance field model of the target scene based on the sample image set.

The browsing track and the neural radiance field model of the target scene may be generated based on the sample image set. A representation model of the target scene may be a fully connected neural network, and the fully connected neural network is also referred to as a multi-layer perceptron (MLP). In an embodiment of this specification, the target scene may be represented as a neural radiance field (NERF). The neural radiance field model can predict and output a volume density and color information of a space point based on inputted space coordinates and visual angle information of the space point. The neural radiance field model may be expressed as: $σ , c = F \left(d, X\right)$ where X = (x, y, z), X is recorded as the space coordinates (x, y, z) of the space point; d = (θ, Ø) is recorded as visual angle information (θ, Ø) of the space point, θ is an azimuth angle, and Ø is an elevation angle; c = (r, g, b), c is recorded as color information (r, g, b) of the space point, r refers to red (Red, R), g refers to green (Green, G), and b refers to blue (Blue, B); and σ is recorded as a volume density of the space point. After the sample image set of the target scene is obtained, a camera pose corresponding to each original sample image is calculated, and a plurality of lines of sight that are transmitted by the camera when the camera paragraphs each original sample image, and visual angle information of each line of sight are determined based on data such as the camera pose corresponding to each original sample image and camera intrinsic parameters. Space point sampling is performed on each line of sight, to obtain a plurality of space points. It should be understood that, the visual angle information of the space point obtained through sampling on a same line of sight is the visual angle information of the line of sight. After the plurality of space points are obtained, the three-dimensional reconstruction based on a neural network is performed by using the space coordinates and the visual angle information of the plurality of space points. The process may be a process performed in batches for a plurality of times, and the neural radiance field model of the target scene may be finally obtained.

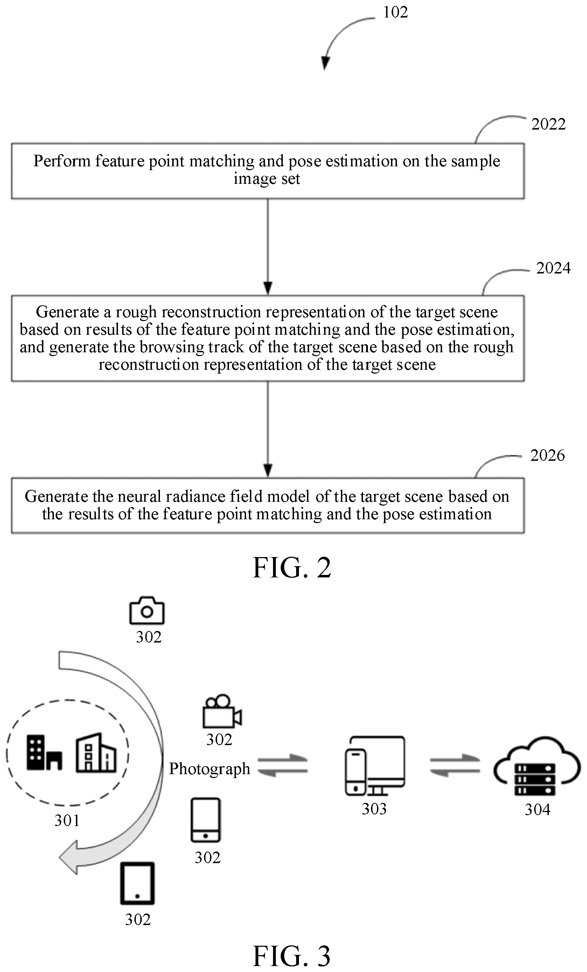

The browsing track of the target scene usually refers to a path along which a camera or an observer moves in the target scene. The path records a position and pose change of the camera or the observer when the camera or the observer observes the target scene, where the browsing track may be a straight line, a curved line, or a complex and irregular path. The browsing track may be represented as a time sequence formed by a plurality of discrete browsing points, or may be represented as a function of a browsing point related to time. As shown in FIG. 2, in some embodiments, step 102 may include 2022 to 2026.

2022: Perform feature point matching and pose estimation on the sample image set. Through feature point matching, points having a similar feature between two or more images can be found, and a correspondence between the points is established, to find a same object or scene between the plurality of original sample images. The pose estimation can calculate the camera pose of each original sample image through matching of known feature points. In some embodiments, a simultaneous localization and mapping (SLAM) algorithm may be used to more accurately calculate the camera pose corresponding to each sample image. Specifically, when the SLAM algorithm calculates the camera pose, the feature point in each sample image is first extracted, then a matching relationship between feature points of two adjacent sample images is established, a relative camera pose between the two adjacent sample images is calculated based on the matching relationship between the feature points of the two adjacent sample images, and a camera pose corresponding to each sample image is calculated based on relative camera poses of quality detection of every two sample images. In some embodiments, each sample image in the sample image set may be processed by using a neural network model, to extract the feature point in each sample image. The feature point may be a point having a prominent property, such as a corner point (for example, a Harris corner point or a Shi-Tomasi corner point), an edge, a half point, or an SIFT feature point. Matching is separately performed on two or more sample images in the sample image set by using the feature point extracted by the neural network model, to determine a correspondence between the feature points. The matching algorithm may be distance-based matching (such as nearest neighbor matching and nearest neighbor distance ratio matching), set relationship-based matching (such as RANSAC-based robust matching), or the like. Pose estimation is performed by using an open-source computer vision software package Colmap based on a correspondence of feature point matching, to obtain a data pair between the original sample image and a pose of the original sample image. In some embodiments, a pose estimation result may further be optimized by using a global pose optimization algorithm, to improve precision and stability of camera pose estimation and three-dimensional reconstruction of the target scene.

2024: Generate a rough reconstruction representation of the target scene based on results of the feature point matching and the pose estimation, and generate the browsing track of the target scene based on the rough reconstruction representation of the target scene. In some embodiments, the target scene may be represented by rough reconstruction as a geometric model based on a sparse three-dimensional feature point. For example, sparse three-dimensional point cloud data of the target scene may be extracted based on the results of the feature point matching and the pose estimation, a rough reconstruction model of the target scene is generated based on the sparse three-dimensional point cloud data, and the browsing track of the target scene is generated based on the rough reconstruction model of the target scene. The sparse three-dimensional point cloud data is a part of discrete and representative three-dimensional points extracted from the target scene, and these points may provide sufficient information to describe a geometric shape and structure of the scene. Sparse key points are extracted to perform triangulation calculation, so that a small point cloud data set may be obtained, thereby reducing a calculation amount and a storage requirement.

The browsing track of the target scene may be obtained by processing a collection track corresponding to the sample image set. Based on pose estimation on the sample image set, the camera pose of each sample image in the sample image set is obtained, and each camera pose corresponds to a collection point of one sample image. A time sequence of the camera poses of the sample images in the sample image set forms the collection track of the sample image set. For original sample images collected in a video photographing manner, a photographing track during video photographing usually conforms to an observation habit of a user, and the collection track of the sample image set is a photographing track during video photographing by the user. In some embodiments, interpolation processing may be performed on the collection track, to obtain the browsing track conforming to the observation habit of the user. An interpolation processing method may be linear interpolation, sample interpolation, Bezier curve interpolation, or the like. In some other embodiments, a center and an orientation of the collection track may be calculated, to generate a circular track as the browsing track. The center point of the collection track is configured for determining a circle center of the generated browsing track, and the orientation of the collection track is configured for determining a start angle of the generated browsing track.

2026: Generate the neural radiance field model of the target scene based on the results of the feature point matching and the pose estimation. In the embodiments of this specification, based on the feature point matching and the pose estimation, a data pair between the sample image and the camera pose can be obtained. All sample images and data pairs of camera poses of all the sample images in the sample image set are configured for training the neural radiance field of the target scene, to obtain the neural radiance field model of the target scene.

106: Generate, based on the browsing track and the neural radiance field model, a rendered image of the target scene corresponding to the browsing track.

In some embodiments, the browsing point includes a browsing position and a browsing visual angle. The browsing position is configured for recording the position of the camera or the observer when the camera or the observer observes the target scene, and may be represented as the coordinates of the space point in the target scene. The browsing visual angle is configured for recording the pose change of the camera or the observer when the camera or the observer observes the target scene, and may be represented as the visual angle information of the space point. The coordinates of the space point represented by the browsing position and the visual angle information represented by the browsing visual angle are inputted to an implicit three-dimensional representation model of the target scene for prediction, to obtain the volume density and the color information of the space point, thereby generating the rendered image corresponding to the browsing point in the target scene.

108: Perform quality evaluation on the rendered image, to obtain a quality evaluation result of each rendered image; obtain a supplementary sample image corresponding to the rendered image if the quality evaluation result of the rendered image is lower than expectation; add the supplementary sample image to the sample image set, to obtain an updated sample image set; regenerate the implicit three-dimensional representation model of the target scene based on the updated sample image set, to obtain an updated implicit three-dimensional representation model; regenerate, based on the browsing track and the updated implicit three-dimensional representation model, the rendered image of the target scene corresponding to the browsing track; and repeat this step, until the quality evaluation result of the rendered image of the target scene corresponding to the browsing track is not lower than expectation.

In the embodiments of this specification, requirements on quality and quantity of the original sample images of the target scene obtained in step 104 are not limited, to improve efficiency of obtaining the sample image set of the target scene and reduce sample collection costs. Therefore, the quantity and visual angles of collected original sample images in the sample image set are limited. The neural radiance field model obtained through training based on the original sample images is usually a low-quality neural radiance field model with incomplete visual angles. Quality of rendered images of the neural radiance field model under different visual angles is unbalanced. Therefore, a case in which rendered images of some browsing points in the browsing track are low may occur.

In some embodiments, indicators for quality evaluation of the rendered image may include peak signal-to-noise ratio (PSNR), structural similarity (SSIM), image sharpness, and the like. For example, weighted summation may be performed on the indicators configured for quality evaluation, and a quality evaluation result of the rendered image is obtained after normalization. The quality evaluation result is compared with a preset quality evaluation indicator value. If the quality evaluation result is greater than or equal to the preset quality evaluation indicator value, it indicates that the quality evaluation result of the rendered image is not less than expectation; and if the quality evaluation result is less than the preset quality evaluation indicator value, it indicates that the quality evaluation result of the rendered image is lower than expectation. If the quality evaluation result of the rendered image is lower than expectation, it means that incremental learning needs to be performed on the neural radiance field model of the target scene generated in step 102.

In some embodiments, the obtaining a supplementary sample image corresponding to the rendered image if the quality evaluation result of the rendered image is lower than expectation includes: obtaining a browsing point corresponding to a rendered image whose quality evaluation result is lower than expectation; and initiating, based on the obtained browsing point, a sample image supplementary collection of the target scene corresponding to the browsing point, to obtain a supplementary sample image of the rendered image. For example, the browsing position of the browsing point may be marked on a real-time rendering platform of the target scene, or a rendered image with a poor quality evaluation result may be outputted, to indicate a visual angle needing to be used during image supplementary collection, so that a camera position and a camera pose of a supplementarily collected supplementary sample image are the same as or close to the browsing position and the browsing visual angle of the rendered image.

It should be noted that, step 106 and step 108 may be performed alternately, or may be performed in sequence. In other words, each time a rendered image is generated, quality evaluation may be performed on the generated rendered image, and whether incremental learning is needed is determined based on the quality evaluation result. Alternatively, after all rendering images of the browsing track are generated in step 106, in step 108, quality evaluation is performed on each generated rendering image, and based on the quality evaluation result, whether incremental learning is needed is determined. The latter is used in the embodiments of this specification. In step 108, the sample image supplementary collection is performed on all browsing points corresponding to rendered images whose quality evaluation results do not satisfy expectation. A quantity of supplementary sample images of each browsing point is not limited in the embodiments of this specification. One or more supplementary sample images may be collected. Specifically, a guide track for assisting supplementary collection may further be generated based on a plurality of browsing points, to indicate a collection track of video photographing. A video photographed based on the collection track may include supplementary sample images of the browsing points corresponding to the rendered images whose quality evaluation results do not satisfy expectation.

In the embodiments, the supplementary sample image is added to the sample image set, to obtain an updated sample image set. The updated image sample set includes an original sample image corresponding to a visual angle with poor rendering quality. Feature point matching and pose estimation are performed on the updated sample image set by using a means similar to step 2022, to obtain the feature point and the corresponding camera pose of each sample image. Based on the results of the feature matching and the pose estimation, the neural radiance field model of the target scene is trained again by using the updated sample image set. The neural radiance field model may be trained again by adding training data to a previously obtained neural radiance field model, or a new neural radiance field model may be trained from the beginning. Because the supplementary sample image is collected for a browsing point of the rendered image whose rendering quality is lower than expectation, incremental training of the neural radiance field model based on the updated sample image set can make up for a representation defect more targetedly and efficiently, and a representation effect of the updated neural radiance field model at a corresponding browsing point is improved. In this way, after this step is repeated, representation defects of the neural radiance field model of the target scene under different visual angles may be continuously repaired. Finally, quality evaluation results of all rendered images of the target scene corresponding to the browsing track can satisfy expectation. Finally, a high-quality neural radiance field model of the target scene can be obtained.

110: Generate a panoramic video of the target scene based on the rendered image of the target scene corresponding to the browsing track.

In some embodiments, all rendered images corresponding to the browsing track are spliced into the panorama image of the target scene by using an image splicing algorithm. The image splicing algorithm may automatically pack and fuse the images based on overlapping areas in the images and camera parameters. For example, algorithms such as feature matching, image registration, and image fusion may be used. In some embodiments, the panoramic image of the target scene is converted to a panoramic video by using a video processing library. In some other embodiments, secondary editing, such as stylization processing or resolution optimization processing, may be performed on the generated panoramic video, to obtain a high-quality panoramic video of the target scene.

According to the video service method provided in the embodiments of this specification, for the quality evaluation result of the rendered image, the sample image can be supplementarily collected in a targeted manner, and the sample image is added to the sample image set to perform incremental learning on the neural radiation field of the target scene, thereby improving generation efficiency and quality of the panoramic video.

For ease of understanding, the following describes the video generation method provided in the embodiments of this application in detail according to several scene embodiments.

### Scene embodiment 1

In an e-commerce scene, an immersive panoramic video of a commodity or a shop may be created by using the video generation method provided in the embodiments of this application. Referring to FIG. 3, in an actual application, a merchant may use a photographing apparatus 302 such as a mobile phone, a tablet computer, a wearable intelligent device, a smart household device, or a camera to photograph a video in a manner of surrounding a target scene 301 (which may be a commodity or a store object). The merchant may initiate a picture or video uploading operation on a human-computer interaction interface (for example, a Web interface) provided by a client 303, to upload pictures or videos including a plurality of target scenes to a server end 304 that performs the video generation method. The client 303 may be independent of the photographing apparatus 302, for example, a device such as a mobile phone, a tablet computer, or a computer on which a video service client app or a mini app is installed. Alternatively, the client 303 and the photographing apparatus 302 may be integrated into a same device, for example, a mobile phone or a tablet computer that has a photographing function and on which a client app or a mini app is installed. The server end 304 is a single server or a distributed server cluster including a plurality of servers. Further optionally, the server end 304 may be a cloud server. The server end 304 runs the video generation method of this embodiment based on a plurality of images or videos of the target scene, to generate the panoramic video of the target scene and send the panoramic video to the client for presentation by the client.

### Scene embodiment 2

In the field of artificial intelligence (AI) markets, to provide immersive experience with a 3D scene for online shopping of consumers, a three-dimensional model may be created for the shop. Therefore, a designer may use a mobile phone to photograph a video surrounding the shop (the target scene) in a real scene, and upload the video to an apparatus for executing the video generation method. A video generation apparatus generates the panoramic video of the shop based on a plurality of shop-related pictures in the video, to complete an AI scene creation task of the shop.

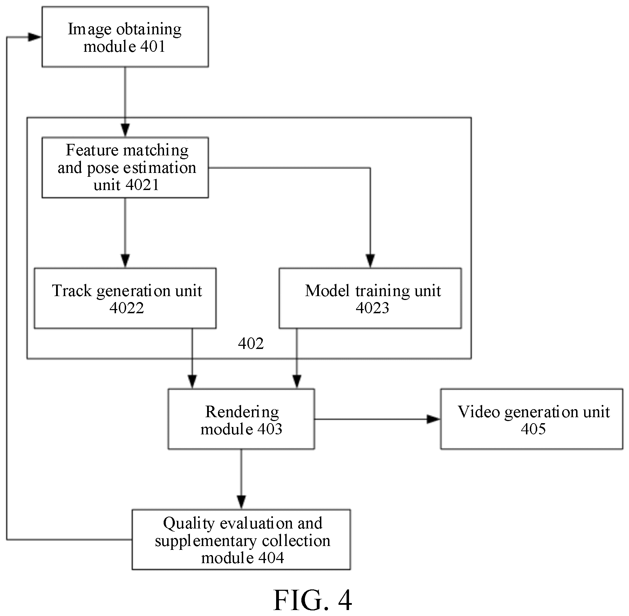

In addition, corresponding to the video generation method shown in FIG. 1, an embodiment of this specification further provides a video generation apparatus. FIG. 4 is a schematic structural diagram of a video generation apparatus 400 according to an embodiment of this specification. The video generation apparatus 400 includes the following modules.

A picture obtaining module 401 is configured to obtain a sample image set of a target scene, the sample image set including a plurality of original sample images related to the target scene. Before three-dimensional reconstruction is performed on the target scene, the sample image set of the target scene is obtained, and the sample image set includes the plurality of original sample images related to the target scene, to facilitate performing three-dimensional reconstruction of the target scene based on the original sample images.

An image processing module 402 is configured to generate a browsing track of the target scene and a neural radiance field model of the target scene based on the sample image set. The neural radiance field model can predict and output a volume density and color information of a space point based on inputted space coordinates and visual angle information of the space point. The browsing track of the target scene usually refers to a path along which a camera or an observer moves in the target scene. The path records a position and pose change of the camera or the observer when the camera or the observer observes the target scene, where the browsing track may be a straight line, a curved line, or a complex and irregular path. The browsing track may be represented as a time sequence formed by a plurality of discrete browsing points, or may be represented as a function of a browsing point related to time.

In some embodiments, the image processing module 402 includes a feature matching and pose estimation unit 4021, a track generation unit 4022, and a model training unit 4023.

The feature matching and pose estimation unit 4021 is configured to perform feature point matching and pose estimation on the sample image set. Through feature point matching, points having a similar feature between two or more images can be found, and a correspondence between the points is established, to find a same object or scene between the plurality of original sample images. The pose estimation can calculate the camera pose of each original sample image through matching of known feature points, to obtain a data pair between the original sample image and a pose of the original sample image.

The track generation unit 4022 is configured to: generate a rough reconstruction representation of the target scene based on results of the feature point matching and the pose estimation, and generate the browsing track of the target scene based on the rough reconstruction representation of the target scene. In an embodiment of this specification, the track generation unit includes a three-dimensional point cloud processing subunit and a track generation subunit.

The three-dimensional point cloud processing subunit is configured to: extract sparse three-dimensional point cloud data of the target scene based on the results of the feature point matching and the pose estimation, and generate a rough reconstruction model of the target scene based on the sparse three-dimensional point cloud data. The sparse three-dimensional point cloud data is a part of discrete and representative three-dimensional points extracted from the target scene, and these points may provide sufficient information to describe a geometric shape and structure of the scene. Sparse key points are extracted to perform triangulation calculation, so that a small point cloud data set may be obtained, thereby reducing a calculation amount and a storage requirement.

The track generation subunit is configured to generate the browsing track of the target scene based on the rough reconstruction model of the target scene.

The browsing track of the target scene may be obtained by processing a collection track corresponding to the sample image set. Based on pose estimation on the sample image set, the camera pose of each sample image in the sample image set is obtained, and each camera pose corresponds to a collection point of one sample image. A time sequence of the camera poses of the sample images in the sample image set forms the collection track of the sample image set. For original sample images collected in a video photographing manner, a photographing track during video photographing usually conforms to an observation habit of a user, and the collection track of the sample image set is a photographing track during video photographing by the user. In some embodiments, the track generation subunit performs interpolation processing on the collection track, to obtain the browsing track conforming to the observation habit of the user. An interpolation processing method may be linear interpolation, sample interpolation, Bezier curve interpolation, or the like. In some other embodiments, the track generation subunit may calculate a center and an orientation of the collection track, to generate a circular track as the browsing track. The center point of the collection track is configured for determining a circle center of the generated browsing track, and the orientation of the collection track is configured for determining a start angle of the generated browsing track.

The model training unit 4023 is configured to generate the neural radiance field model of the target scene based on the results of the feature point matching and the pose estimation. Based on the feature point matching and the pose estimation, a data pair between the sample image and the camera pose can be obtained. All sample images and data pairs of camera poses of all the sample images in the sample image set are configured for training the neural radiance field of the target scene, to obtain the neural radiance field model of the target scene.

A rendering module 403 is configured to generate, based on the browsing track and the neural radiance field model, a rendered image of the target scene corresponding to the browsing track. In some embodiments, the browsing point includes a browsing position and a browsing visual angle. The browsing position is configured for recording the position of the camera or the observer when the camera or the observer observes the target scene, and may be represented as the coordinates of the space point in the target scene. The browsing visual angle is configured for recording the pose change of the camera or the observer when the camera or the observer observes the target scene, and may be represented as the visual angle information of the space point. The coordinates of the space point represented by the browsing position and the visual angle information represented by the browsing visual angle are inputted to an implicit three-dimensional representation model of the target scene for prediction, to obtain the volume density and the color information of the space point, thereby generating the rendered image corresponding to the browsing point in the target scene.

In the embodiments of this specification, requirements on quality and quantity of the original sample images of the target scene obtained by the image obtaining module 401 are not limited, to improve efficiency of obtaining the sample image set of the target scene and reduce sample collection costs. Therefore, the quantity and visual angles of collected original sample images in the sample image set are limited. The neural radiance field model obtained through training based on the original sample images is usually a low-quality neural radiance field model with incomplete visual angles. Quality of rendered images of the neural radiance field model under different visual angles is unbalanced. Therefore, a case in which rendered images of some browsing points in the browsing track are low may occur.

A quality evaluation and supplementary collection module 404 is configured to: perform quality evaluation on the rendered image, to obtain a quality evaluation result of each rendered image; obtain a supplementary sample image corresponding to the rendered image if the quality evaluation result of the rendered image is lower than expectation; add the supplementary sample image to the sample image set, to obtain an updated sample image set; regenerate the neural radiance field model of the target scene based on the updated sample image set, to obtain an updated neural radiance field model; regenerate, based on the browsing track and the updated neural radiance field model, the rendered image of the target scene corresponding to the browsing track; and repeat this step, until the quality evaluation result of the rendered image of the target scene corresponding to the browsing track is not lower than expectation.

For a rendered image whose quality evaluation does not satisfy expectation, the quality evaluation and supplementary collection module 404 adds the supplementary sample image to the sample image set, to obtain an updated sample image set. The updated image sample set includes an original sample image corresponding to a visual angle with poor rendering quality. The feature matching and pose estimation unit 4021 performs feature point matching and pose estimation on the updated sample image set, to obtain the feature point and the corresponding camera pose of each sample image. Based on the results of the feature matching and the pose estimation, the model training unit 4023 trains the neural radiance field model of the target scene again by using the updated sample image set. Because the supplementary sample image is collected for a browsing point of the rendered image whose rendering quality is lower than expectation, incremental training of the neural radiance field model based on the updated sample image set can make up for a representation defect more targetedly and efficiently, and a representation effect of the updated neural radiance field model at a corresponding browsing point is improved. In this way, after repetition, representation defects of the neural radiance field model of the target scene under different visual angles may be continuously repaired. Finally, quality evaluation results of all rendered images of the target scene corresponding to the browsing track generated by the rendering module 403 can satisfy expectation. Finally, a high-quality neural radiance field model of the target scene can be obtained.

The video generation module 405 is configured to generate a panoramic video of the target scene based on the rendered image of the target scene corresponding to the browsing track.

According to the video generation apparatus in the embodiments of this specification, for the quality evaluation result of the rendered image, the sample image can be supplementarily collected in a targeted manner, and the sample image is added to the sample image set to perform incremental learning on the neural radiation field of the target scene, thereby improving generation efficiency and quality of the panoramic video.

In some embodiments, the video generation apparatus further includes: a stylization processing module configured to perform stylization processing on the panoramic video.

In some embodiments, the video generation apparatus further includes: an optimization module configured to perform super-resolution optimization processing on the panoramic video.

The embodiments of this specification are all described in a progressive manner. Mutual reference can be made for the same or similar parts in the embodiments. Each embodiment focuses on a difference from other embodiments. Especially, an apparatus embodiment is basically similar to a method embodiment, and therefore is described briefly; for related parts, reference may be made to partial descriptions in the method embodiment.

In addition, an embodiment of this application further provides another computer-readable storage medium, storing a computer program, and the computer program, when executed by the processor, implementing steps of the method according to any one of the foregoing embodiments. When the forming modules of the foregoing apparatus are implemented in the form of software functional units and sold or used as independent products, the modules may be stored in the computer-readable storage medium.

All or some of the foregoing embodiments may be implemented through software, hardware, firmware, or any combination thereof. When software is configured to implement embodiments, all or some embodiments may be implemented in a form of a computer program product. The computer program product includes one or more computer instructions. When the computer program instructions are loaded and executed on a computer, all or some of the processes or functions according to the embodiments of this specification are generated. The computer may be a general-purpose computer, a dedicated computer, a computer network, or another programmable apparatus. The computer instructions may be stored in the computer-readable storage medium or transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example infrared, radio, or microwave) manner. The computer-readable storage medium may be any usable medium that can be accessed by the computer, or a data storage device, such as a server or a data center in which one or more usable mediums are integrated. The available medium may be a magnetic medium (for example, a floppy disk, a hard disk, or a magnetic tape), an optical medium (for example, a digital versatile disc (DVD)), a semiconductor medium (for example, a solid state disk (SSD)), or the like.

An embodiment of this application further provides an electronic device, including:
one or more processors; and
a memory associated with the one or more processors, the memory being configured to store program instructions, and the program instructions, when being read and executed by the one or more processors, performing the steps of the method according to any one of the foregoing method embodiments.

This application further provides a computer program product, including a computer program, the computer program, when executed by a processor, implementing steps of the method according to any one of the foregoing method embodiments.

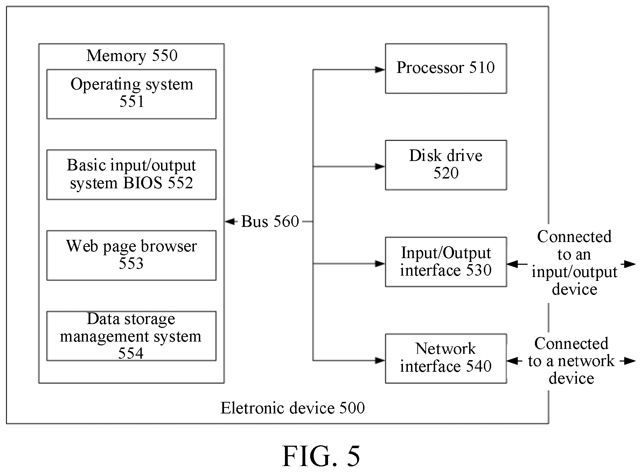

FIG. 5 exemplarily shows an architecture of an electronic device 500, which may specifically include: a processor 510, a disk drive 520, an input/output interface 530, a network interface 540, and a memory 550. The processor 510, the disk drive 520, the input/output interface 530, the network interface 540, and the memory 550 may be in communication connection through a communication bus 560.

The processor 510 may be implemented by using a general-purpose CPU, a microprocessor, an application specific integrated circuit (ASIC), one or more integrated circuits, or the like, and is configured to execute a related program to implement the technical solutions provided in this application.

The memory 550 may be implemented in the form of a read only memory (ROM), a random access memory (RAM), a static memory, a dynamic storage device, or the like. The memory 550 may store an operating system 551 configured to control running of the electronic device 500, and a basic input/output system (BIOS) 552 configured to control a low-level operation of the electronic device 500. In addition, a web page browser 553, a data storage management system 554, and the like may further be stored. In conclusion, when the technical solutions provided in this application are implemented by using software or firmware, related program code is stored in the memory 550, and is invoked and executed by the processor 510.

The input/output interface 530 is configured to connect to an input/output module, to implement information input and output. The input/output module may be configured in a device (not shown in the figure) as a component, or may be externally connected to a device to provide a corresponding function. The input device may include a keyboard, a mouse, a touchscreen, a microphone, various sensors, and the like. The output device may include a display, a speaker, a vibrator, a prompt light, and the like.

The network interface 540 is configured to connect to a communication module (not shown in the figure), to implement communication and interaction between the device and another device. The communication module may implement communication in a wired manner (such as a USB or a network cable), or may implement communication in a wireless manner (such as a mobile network, Wi-Fi, or Bluetooth).

The bus 560 includes a path for transmitting information between components (for example, the processor 510, the disk drive 520, the input/output interface 530, the network interface 540, and the memory 550) of the device.

It should be noted that, although the foregoing device only shows the processor 510, the disk drive 520, the input/output interface 530, the network interface 540, the memory 550, the bus 560, and the like, in a specific implementation process, the device may further include other components necessary for implementing normal running. In addition, a person skilled in the art may understand that the foregoing device may include only components necessary for implementing the method of this application, and does not need to include all components shown in the figure.

A person of ordinary skill in the art may understand that all or some of the processes of the methods in the foregoing embodiments may be implemented by a computer program instructing relevant hardware. The program may be stored in a computer-readable storage medium. When the program runs, the processes of the foregoing methods in the embodiments are performed. The foregoing storage medium includes: any medium that may store program code, such as a ROM, a RAM, a magnetic disk, or an optical disc. In a case of no conflict, technical features in this embodiment and implementation solutions may be randomly combined.

The foregoing embodiments are merely preferred embodiments of this specification, but are not intended to limit the scope of this specification. Various changes and improvements made by a person of ordinary skill in the art to the technical solutions of this specification without departing from the design spirit of this specification shall fall within the protection scope determined by the claims of this specification.

## Claims

1. A video generation service method, comprising:
obtaining a sample image set of a target scene, the sample image set comprising a plurality of original sample images related to the target scene;
generating a browsing track of the target scene and a neural radiance field model of the target scene based on the sample image set;
generating, based on the browsing track and the neural radiance field model, a rendered image of the target scene corresponding to the browsing track;
performing quality evaluation on the rendered image, to obtain a quality evaluation result of each rendered image; obtaining a supplementary sample image corresponding to the rendered image if the quality evaluation result of the rendered image is lower than expectation; adding the supplementary sample image to the sample image set, to obtain an updated sample image set; regenerating the neural radiance field model of the target scene based on the updated sample image set, to obtain an updated neural radiance field model; regenerating, based on the browsing track and the updated neural radiance field model, the rendered image of the target scene corresponding to the browsing track; and repeating this step, until the quality evaluation result of the rendered image of the target scene corresponding to the browsing track is not lower than expectation; and
generating a panoramic video of the target scene based on the rendered image of the target scene corresponding to the browsing track.

2. The method according to claim 1, wherein the generating a browsing track of the target scene and a neural radiance field model of the target scene based on the sample image set comprises:
performing feature point matching and pose estimation on the sample image set;
generating a rough reconstruction representation of the target scene based on results of the feature point matching and the pose estimation, and generating the browsing track of the target scene based on the rough reconstruction representation of the target scene; and
generating the neural radiance field model of the target scene based on the results of the feature point matching and the pose estimation.

3. The method according to claim 2, wherein the generating a rough reconstruction representation of the target scene based on results of the feature point matching and the pose estimation, and generating the browsing track of the target scene based on the rough reconstruction representation of the target scene comprises:
extracting sparse three-dimensional point cloud data of the target scene based on the results of the feature point matching and the pose estimation, and generating a rough reconstruction model of the target scene based on the sparse three-dimensional point cloud data; and
generating the browsing track of the target scene based on the rough reconstruction model of the target scene.

4. The method according to claim 2, wherein the generating the browsing track of the target scene based on the rough reconstruction representation of the target scene comprises:
generating a collection track of the sample image set based on the rough reconstruction representation of the target scene, the collection track comprising a plurality of collection points; and
performing interpolation processing on the collection track, to obtain the browsing track.

5. The method according to claim 2, wherein the generating the browsing track of the target scene based on the rough reconstruction representation of the target scene comprises:
generating a collection track of the sample image set based on the rough reconstruction representation of the target scene; and
generating a circular track as the browsing track based on a center and an orientation of the collection track.

6. The method according to claim 1, wherein the browsing track comprises a plurality of browsing points, the browsing points comprise a browsing position and a browsing visual angle corresponding to the browsing position; and
the generating, based on the browsing track and the neural radiance field model, a rendered image corresponding to the browsing track in the target scene comprises:
inputting the browsing position and the browsing visual angle of each browsing point into the neural radiance field model of the target scene, to obtain a rendered color and rendered density data corresponding to the browsing point that are of the target scene, and generating, based on the rendered color and the rendered density data, the rendered image of the target scene corresponding to the browsing point.

7. The method according to claim 6, wherein the obtaining a supplementary sample image corresponding to the rendered image if the quality evaluation result of the rendered image is lower than expectation comprises:
obtaining a browsing point corresponding to a rendered image whose quality evaluation result is lower than expectation; and
initiating, based on the obtained browsing point, a sample image supplementary collection of the target scene corresponding to the browsing point, to obtain a supplementary sample image of the rendered image.

8. The method according to claim 1, wherein after the generating a panoramic video of the target scene based on the rendered image of the target scene corresponding to the browsing track, the method further comprises:
performing stylization processing on the panoramic video.

9. The method according to claim 1, wherein after the generating a panoramic video of the target scene based on the rendered image of the target scene corresponding to the browsing track, the method further comprises:
performing super-resolution optimization processing on the panoramic video.

10. A video generation apparatus, comprising:
an image obtaining module, configured to obtain a sample image set of a target scene, the sample image set comprising a plurality of original sample images related to the target scene;
an image processing module, configured to generate a browsing track of the target scene and a neural radiance field model of the target scene based on the sample image set;
a rendering module, configured to generate, based on the browsing track and the neural radiance field model, a rendered image of the target scene corresponding to the browsing track;
a quality evaluation and supplementary collection module, configured to: perform quality evaluation on the rendered image, to obtain a quality evaluation result of each rendered image; obtain a supplementary sample image corresponding to the rendered image if the quality evaluation result of the rendered image is lower than expectation; add the supplementary sample image to the sample image set, to obtain an updated sample image set; regenerate the neural radiance field model of the target scene based on the updated sample image set, to obtain an updated neural radiance field model; regenerate, based on the browsing track and the updated neural radiance field model, the rendered image of the target scene corresponding to the browsing track; and repeat this step, until the quality evaluation result of the rendered image of the target scene corresponding to the browsing track is not lower than expectation; and
a video generation module, configured to generate a panoramic video of the target scene based on the rendered image of the target scene corresponding to the browsing track.

11. The apparatus according to claim 10, wherein the image processing module comprises:
a feature matching and pose estimation unit, configured to perform feature point matching and pose estimation on the sample image set;
a track generation unit, configured to: generate a rough reconstruction representation of the target scene based on results of the feature point matching and the pose estimation, and generate the browsing track of the target scene based on the rough reconstruction representation of the target scene; and
a model training unit, configured to generate the neural radiance field model of the target scene based on the results of the feature point matching and the pose estimation.

12. The apparatus according to claim 11, wherein the track generation unit comprises:
a three-dimensional point cloud processing subunit, configured to: extract sparse three-dimensional point cloud data of the target scene based on the results of the feature point matching and the pose estimation, and generate a rough reconstruction model of the target scene based on the sparse three-dimensional point cloud data; and
a track generation subunit, configured to generate the browsing track of the target scene based on the rough reconstruction model of the target scene.

13. The apparatus according to claim 10, further comprising:
a stylization processing module, configured to perform stylization processing on the panoramic video.

14. The apparatus according to claim 10, further comprising:
an optimization module, configured to perform super-resolution optimization processing on the panoramic video.

15. A computer-readable storage medium, storing a computer program, the computer program, when executed by a processor, implementing the steps of the method according to any one of claims 1 to 9.

16. An electronic device, comprising:
one or more processors; and
a memory associated with the one or more processors, the memory being configured to store program instructions, and the program instructions, when being read and executed by the one or more processors, implementing the steps of the method according to any one of claims 1 to 9.
